# EUROPEAN PATENT APPLICATION

(11) **EP 0 740 906 A2**
(43) Date of publication of application: **06.11.1996**
(21) Application number: 95117461.4
(22) Date of filing: 06.11.1995
(51) Int. Cl.: A23G 9/26, A23G 9/02

(54) **A method and apparatus for making a stick ice**

(30) Priority: 05.05.1995 IT MI950909
(71) Applicant: S.I.D.A.M. Stampi Industria Dolciaria Affini Milano S.r.l., I-20032 Cormano (Milan) (IT)
(72) Inventor: Grigoli, Franco Albino Luigi, I-20125 Milan (IT)
(74) Representative: La Ciura, Salvatore

(57) **Abstract**

The invention relates to a method of making stick ices which comprises:
- filling ice molds with water;
- introducing the molds into a freezing tank, and, after a time sufficient for an ice film to form on inside walls of the molds,
- removing unfrozen water from the molds by suction;
- Introducing a product;
- Inserting a stick;
- when freezing is completed, warming the mold wall to such an extent as to cause said ice film to thaw;
- removing the product.

The invention also relates to an apparatus for carrying out the method.

## Description

This invention relates to a method and apparatus for making a stick ice (ice lolly), wherein, prior to introducing a product into an ice mold for freezing therein, an ice shell is created inside the mold all over the wall thereof.

In this way, at the time when the product is to be taken out of a mold it is sufficient to cause this thin ice film covering the ice to thaw to permit the product to be removed without any loss of product and, thus, any contamination of washing water to occur.

As a result, expensive treating steps for eliminating fat and sugar prior to discharge is avoided.

The apparatus is of the "in-line" type and comprises, therefore, a first station where a brine-immersed mold is filled with water; a second station where water is removed by suction; and successive stations providing for, in the order, product introduction, stick insertion and finished product taking out.

The invention relates to, in particular, the field of stick ice (ice lolly) making machines of a linear type, that is machines in which molds are moved, from filling to extracting station, in a substantially straight path, to be then turned upside down and moved back to their starting location by passing through an intermediate washing station. It should be, however, apparent that a same solution-idea could be applied to other types of ice producing equipments as well.

In linear-type, stick ice making machines as known heretofore, series of molds are moved in a path on which different devices are arranged and provide for such operations as mold filling, stick insertion, product extraction and a further mold washing operation.

These molds are generally driven by chain means or the like running on a vertical plane in an endless path, on an upper portion of which there is a brine filled tank for the product to be frozen, while on a lower portion thereof, where the molds are turned upside down, a station is provided for washing the molds.

In these known machines the mold is filled with product while slowly moving through the freezing, brine-containing tank. When the product is nearly to become hardened a stick is automatically inserted into product and means are provided at the exit of the tank by which a given amount of warm water is sprayed to the mold outer wall to cause the product surface to thaw thereby to permit removal of product from mold.

However, this system suffers from some drawbacks and this invention is directed to overcoming these drawbacks.

The drawbacks result from the fact that the thin layer of product that is caused to thaw to permit removal of product will collect on the bottom of the mold to be then discharged into washing water.

This implies that a substastial amount of product (about 2 cm² per mold) will be lost into, and contaminate the washing water which must, therefore, be subjected to expensive treatments in order to remove fats and sugars therefrom prior to discharging.

It would, therefore, be highly desirable to be able to overcome this drawback which result in the costs to be heavily affected, especially when production in large quantities are involved.

Accordingly, this invention provides a method and apparatus whereby, before the mold is filled, an ice film is caused to form inside the mold, all over the wall thereof.

In this way it is possible, at the time when the product is to be taken out, to cause only this ice film to thaw so as to allow the product to be removed without any part thereof remaining collected on the mold bottom.

At the end of a cycle, therefore, the mold will contain water only or, at worst, water with a few traces of product, so that all of the above-mentioned drawbacks can be avoided.

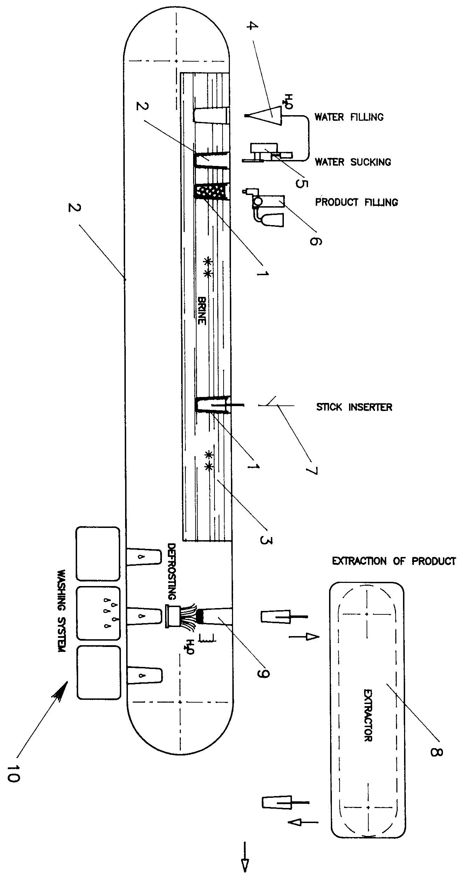

The invention is described in more detail herein below by way of an example only, with reference to the figure of the accompanying drawing which schematically shows an apparatus for making stick ices according to the invention.

Referring to the figure, an apparatus according to the invention comprises a plurality of molds designated by reference number 1, which are moved in an endless path as schematically shown under reference number 2.

These molds can be driven by means of chains or the like so as to run a first, upper, substantially horizontal portion of the path loop where different stations provided with appropriate ice making devices are located, whereafter the molds are returned to their starting position by being moved, upside down, on a lower portion of the endless path, where the washing devices are placed.

Arranged at the top of apparatus, is a brine-filled tank 3 for freezing the product.

At the beginning of said path, a station 4 is provided wherein the molds are filled with water according to the invention.

Placed downstream of station 4 is a suction station 5, wherein devices are provided for sucking up water from the mold to completely empty it except for a film of ice having become hardened on the inside mold walls in the meantime.

The thickness of this ice film will be a function of the brine temperature, the filling water temperature, and the time the water-filled mold will stay in the freezing tank, which is in turn dependent on the distance between stations 4 and 5, and the velocity of running molds.

In practice, by working on these parameters, it is possible to set the thickness of the ice layer at will, which ice layer should be such as to form a sort of ice shell adhering to the inside wall of mold.

Moreover, a station 6 is provided for charging the product and a station 7 for inserting a stick into it, both these stations being of a known type.

At the exit of tank 3, a station 8 is provided for taking the product out of its mold, which station 8 is also of a type known, and comprises spray devices 9 for spraying warm water against the outer wall of the mold to cause the surface of its contents to thaw thereby allowing the ice product to be withdrawn.

In this case again, by properly managing such parameters as water temperature and warming time, it is possible to cause only the ice shell covering the inside of the mold to saw completely or in part.

In this way, once the product is removed, only a small amount of residual water - at most, with a few traces of product - will remain in the mold.

Under these conditions, a simple rinsing of the molds in subsequent washing station, as designated by reference number 10, will be sufficient for the molds to continue their travel to go back to their starting position.

In this manner, a saving in product is achieved and dispersion of product into washing water is avoided, thereby considerably reducing water consumption while suppressing the need for intensive treatment of washing water.

As will clearly appear from the above description, the following steps are provided in succession by the method according to the invention:
- filling a mold with water while the mold is immersed in a freezing tank, and, after a time sufficient for the water having hardened into an ice layer on the inside mold wall,
- removing the still unfrozen water from the mold by suction;
- filling the mold with product;
- Inserting a stick into product;
- warming the outer mold wall to such an extent as to obtain that all or part of the ice layer is caused to thaw, and removing the product.

It should be readily apparent to any person skilled in the art that many modifications and variations may be easily made to the embodiment of the invention as described above and shown in the accompanying drawing, without departing from the spirit and scope of the inventive idea as defined in the annexed claims.

## Claims

1. A method of making a stick ice (ice lolly), wherein a quantity of product is poured into a mold while moving through a freezing tank, a stick is inserted into product and, upon freezing completion, the mold is warmed for removing product, characterized in that prior to introduction of product, the inside wall of the mold is caused to become covered with an ice layer.

2. The method according to claim 1, characterized in that the following steps are carried out before introducing product into mold:
- filling the mold with water;
- maintaining the mold in freezing tank for a time sufficient to cause an ice layer to form on the inside wall of the mold;
- removing unfrozen water from the mold by suction.

3. A method of making stick ices characterized in that the method comprises the following steps:
- filling the ice molds with water;
- introducing the ice molds into, and allow them to remain in a freezing tank for a time sufficient to cause an ice film to form on the inside wall of the molds;
- removing unfrozen water from the molds by suction;
- introducing a product into the molds;
- inserting a stick into product;
- when freezing is completed, warming the mold wall to such an extent as to cause the ice film to thaw;
- removing the product.

4. An apparatus for making stick ices according to the method of any preceding claims, of a type comprising means for filling a product into a series of molds that are moved through a freezing tank; means for inserting a stick; and means for warming the mold wall and removing the product, characterized in that the apparatus comprises, upstrem of the above mentioned means, a station for filling water into the molds and a station for removing water by suction, said second station being placed at such a distance to said first station as to allow a layer of water to freeze into an ice film on the inside wall of the molds.

5. The apparatus according to claim 4, wherein means are provided at the product-removing area, which are able to spray warm water on the molds so as to cause all or part of said ice film to thaw.

6. Stick ices as produced by the method according to any one of claims 1 to 3.
